# EUROPEAN PATENT SPECIFICATION

(11) **EP 4 009 402 B1**
(45) Date of publication and mention of the grant of the patent: **11.11.2026**
(21) Application number: 21211425.0
(22) Date of filing: 30.11.2021
(51) Int. Cl.: H01M 4/36, H01M 4/62, H01M 4/505, H01M 4/525, H01M 10/0525, H01M 4/02

(54) **COATED ACTIVE MATERIAL AND NONAQUEOUS ELECTROLYTE SECONDARY BATTERY USING COATED ACTIVE MATERIAL**
BESCHICHTETES AKTIVES MATERIAL UND SEKUNDÄRBATTERIE MIT NICHTWÄSSRIGEM ELEKTROLYT MIT BESCHICHTETEM AKTIVEN MATERIAL
MATÉRIAU ACTIF REVÊTU ET BATTERIE SECONDAIRE À ÉLECTROLYTE NON AQUEUX UTILISANT LE MATÉRIAU ACTIF REVÊTU

(30) Priority: 03.12.2020 JP 2020200839
(43) Date of publication of application: 08.06.2022
(73) Proprietor: Prime Planet Energy & Solutions, Inc., Tokyo 103-0022 (JP)
(72) Inventor: PROCTER, Momoko, Tokyo, 103-0022 (JP)
(74) Representative: Kuhnen & Wacker Patent- und Rechtsanwaltsbüro PartG mbB

(56) References cited:
- WO-A1-2020/196610
- CN-A- 105 576 224
- US-A1- 2017 222 223
- ZHENG, J.M. ET AL: "The effects of TiO"2 coating on the electrochemical performance of Li[Li"0"."2Mn"0"."5"4Ni"0"."1"3Co"0"."1"3]O"2 cathode material for lithium-ion battery", SOLID STATE IONICS NORTH HOLLAND PUB. COMPANY. AMSTERDAM; NL, NL, vol. 179, no. 27-32, 30 September 2008 (2008-09-30), pages 1794 - 1799, XP023521386, ISSN: 0167-2738, [retrieved on 20080411], DOI: 10.1016/J.SSI.2008.01.091
- DAMIEN DAMBOURNET ET AL: "Tailored Preparation Methods of TiO 2 Anatase, Rutile, Brookite: Mechanism of Formation and Electrochemical Properties †", CHEMISTRY OF MATERIALS, vol. 22, no. 3, 9 February 2010 (2010-02-09), pages 1173 - 1179, XP055076546, ISSN: 0897-4756, DOI: 10.1021/cm902613h

## Description

### BACKGROUND OF THE INVENTION

### 1. Field of the Invention

The present invention relates to a coated active material. The present invention also relates to a nonaqueous electrolyte secondary battery using the coated active material.

### 2. Description of the Related Art

In recent years, a nonaqueous electrolyte secondary battery such as a lithium ion secondary battery has been suitably used for a potable power supply for a personal computer, a portable terminal, or the like, a power supply for driving an automobile such as a battery electric vehicle (BEV), a hybrid electric vehicle (HEV), or a plug-in hybrid electric vehicle (PHEV), and the like.

In the nonaqueous electrolyte secondary battery, generally, a positive electrode active material is used which is capable of occluding and releasing ions serving as electric charge carriers. For the purpose of improving the characteristics of the nonaqueous electrolyte secondary battery, coating is provided on a positive electrode active material.

For example, Japanese Patent Application Publication No. 2015-99646 (JP 2015-099646 A) indicates that coating of a positive electrode active material having a Li-excessive composition with TiO₂ (particularly, anatase type TiO₂) having a ratio of the (101) X-ray diffraction peak belonging to the anatase type to the (110) X-ray diffraction peak belonging to the rutile type of 2.1 improves the high-rate discharging performance and the output characteristic of a lithium ion secondary battery. Further, Japanese Patent Application Publication No. 2015-204256 (JP 2015-204256 A) indicates that, with the atomic layer deposition method (ALD method), the entire surface of the positive electrode active material is coated with 10 layers to 200 layers of Ti oxide layers, thereby improving the electron conductivity and the cycle characteristic of a battery.
Moreover, US Patent Application Publication US 2017/222 223 A1 discloses a cathode active material and a lithium secondary battery comprising the same according to prior art.

### SUMMARY OF THE INVENTION

However, the present inventors conducted a close study, and as a result, found that there is still room for an improvement in reduction of the reaction resistance for a positive electrode active material coated with TiO₂ in the related art; accordingly, there is room for an improvement of the output characteristic of a nonaqueous electrolyte secondary battery using the same.

Under such circumstances, it is an object of the present invention to provide a positive electrode active material having a coating of TiO₂, and capable of reducing the reaction resistance.

The coated active material herein disclosed includes a positive electrode active material, and a coating present on a surface of the positive electrode active material. Herein, the coating includes brookite type TiO₂ in an amount of 75 mol% or more. A coverage of the coating determined by quantitating the ratio of the elements on the surface of the coated active material particle by the analysis with the X-ray photoelectron spectroscopy is 0.05% or more and 5.6% or less. The coverage is calculated based on the following equation: Coverage (%) = {element ratio of Ti/(element ratio of Ti + element ratio of Me)} × 100, wherein Me is a metal element other than Li of the positive electrode active material. With such a configuration, it is possible to provide a positive electrode active material (a lithium nickel cobalt manganese type composite oxide) having a coating of TiO₂, and capable of reducing the reaction resistance.

In accordance with one desirable aspect of the coated active material herein disclosed, the coverage of the coating is 0.05% or more and 4.5% or less. With such a configuration, it is possible to more reduce the reaction resistance.

According to the present invention , the positive electrode active material is a lithium nickel cobalt manganese type composite oxide. With such a configuration, it is possible to more reduce the reaction resistance.

From another aspect, the nonaqueous electrolyte secondary battery herein disclosed includes a positive electrode, a negative electrode, and a nonaqueous electrolyte. The positive electrode includes the above-mentioned coated active material. With such a configuration, it is possible to provide a nonaqueous electrolyte secondary battery with a high output characteristic.

In accordance with one desirable aspect of the nonaqueous electrolyte secondary battery herein disclosed, the nonaqueous electrolyte secondary battery is a lithium ion secondary battery. With such a configuration, it is possible to provide a lithium ion secondary battery with a high output characteristic.

### BRIEF DESCRIPTION OF THE DRAWINGS

FIG. 1 is a schematic cross sectional view showing one example of a coated active material in accordance with one embodiment of the present invention;
FIG. 2 is a cross sectional view schematically showing the internal structure of a lithium ion secondary battery in accordance with one embodiment of the present invention; and
FIG. 3 is a schematic exploded view showing a configuration of a wound electrode body of the lithium ion secondary battery in accordance with one embodiment of the present invention.

### DESCRIPTION OF THE PREFERRED EMBODIMENTS

Hereinafter, referring to the accompanying drawings, embodiments in accordance with the present invention will be described. It should be noted that the matters not mentioned in the present specification, and necessary for executing the present invention can be grasped as design matters of those skilled in the art based on the related art in the present field. The present invention can be executed based on the contents disclosed in the present specification, and the technical common sense in the present field. Further, in the following drawings, the members/portions exerting the same action are given the same reference numeral and sign for description. Further, the dimensional relation (such as length, width, or thickness) in each drawing does not reflect the actual dimensional relation.

It should be noted that in the present specification, "secondary battery" is a term denoting an electric storage device capable of repeatedly charging and discharging, and encompassing a so-called storage battery, and an electric storage element such as an electric double layer capacitor. Further, in the present specification, the term "lithium ion secondary battery" denotes a secondary battery using lithium ions as electric charge carriers, and implementing charging and discharging by the transfer of electric charges accompanying lithium ions between the positive and negative electrodes.

The coated active material in accordance with the present embodiment includes a positive electrode active material and coatings interspersed/present on the surface of the positive electrode active material. Herein, the coating includes brookite type TiO₂.

As the positive electrode active material, a known positive electrode active material for use in a lithium ion secondary battery may be used. Specifically, for example, as the positive electrode active material, a lithium composite oxide, a lithium transition metal phosphate compound, or the like can be used. The crystal structure of the positive electrode active material has no particular restriction, and may be a layered structure, a spinel structure, an olivine structure, or the like.

The lithium composite oxide is a lithium transition metal composite oxide including at least Ni, Co, and Mn as a transition metal element.

It should be noted that in the present specification, "lithium nickel cobalt manganese type composite oxide" is the term encompassing, besides oxides including Li, Ni, Co, Mn, and O as a constituent element, even an oxide including one or two or more additive elements besides these. Examples of such additive elements may include transition metal elements and main group metal elements such as Mg, Ca, Al, Ti, V, Cr, Y, Zr, Nb, Mo, Hf, Ta, W, Na, Fe, Zn, and Sn. Further, the additive element may be a semi-metal element such as B, C, Si, or P, or a non-metal element such as S, F, Cl, Br, or I.

The lithium nickel cobalt manganese type composite oxide is desirably the one having the composition expressed by the following formula (I).

Li₁₊ₓNi_{y}CO_{z}Mn_{(1-y-z})M_{α}O_{2-β}Q_{β} (I)

In the formula (I), x, y, z, a, and β satisfy 0 ≤ x ≤ 0.7, 0.1 < y < 0.9, 0.1 < z < 0.4, 0 ≤ α ≤ 0.1, and 0 ≤ β ≤ 0.5, respectively. M is at least one element selected from the group consisting of Zr, Mo, W, Mg, Ca, Na, Fe, Cr, Zn, Sn, and Al. Q is at least one element selected from the group consisting of F, Cl, and Br. From the viewpoint of the energy density and the thermal stability, y and z satisfy 0.3 ≤ y ≤ 0.5 and 0.20 ≤ z < 0.4, respectively. x desirably satisfies 0 ≤ x ≤ 0.25, more desirably satisfies 0 ≤ x ≤ 0.15, and is further desirably 0. α desirably satisfies 0 ≤ α ≤ 0.05, and is more desirably 0. β desirably satisfies 0 ≤ β ≤ 0.1, and is more desirably 0.

Examples of the lithium transition metal phosphate compound may include lithium iron phosphate (LiFePO₄), lithium manganese phosphate (LiMnPO₄), and lithium manganese iron phosphate.

The above-mentioned positive electrode active material may be used singly alone, or may be used in combination of two or more thereof.

A composite active material in accordance with the present embodiment has a coating on the surface of the positive electrode active material. The coating includes brookite type TiO₂ (titanium dioxide).

As the crystal structures of TiO₂, anatase type (tetragonal), rutile type (tetragonal), brookite type (rhombic), and the like are known. The brookite type crystal structure is very unstable as compared with the anatase type and rutile type crystal structures. For example, when the brookite type TiO₂ is heated to 650°C or more, transition to the most stable rutile type TiO₂ is caused.

The present embodiment uses this unstable brookite type TiO₂, and achieves the coating of the positive electrode active material with this unstable brookite type TiO₂ by employing mechanochemical processing. The coating including the brookite type TiO₂ tends to form a complex with Li ions due to the instability of the crystal structure of the brookite type TiO₂. For this reason, the coating including the brookite type TiO₂ speeds up the extraction and insertion of Li ions from and to the positive electrode active material. As a result, it becomes possible to reduce the reaction resistance (electric charge transfer resistance) of the coated active material. Further, it is possible to improve the output characteristic of the nonaqueous electrolyte secondary battery using this.

It should be noted that the coating including the brookite type TiO₂ can be confirmed by a known method. Specifically, for example, coating including the brookite type TiO₂ can be confirmed by performing X-ray absorption fine structure (XAFS) analysis on the coating, and analyzing the Ti peak.

It should be noted that the coating may include other components within the range not to remarkably impair the effects of the present invention. Examples of the other components may include TiO₂ other than the brookite type TiO₂ (i.e., anatase type TiO₂ and rutile type TiO₂). The coating includes the brookite type TiO₂ in an amount of 75 mol% or more, desirably 90 mol% or more, and more desirably 95 mol% or more. The coating most desirably includes only the brookite type TiO₂.

In the present embodiment, the coatings are interspersed/present on the surface of the positive electrode active material. Therefore, the coating in the present embodiment is different from the coating covering entirely the surface of the positive electrode active material as a layer. In the present embodiment, for example, a plurality of grain-shaped coatings are interspersed/present on the surface of the positive electrode active material. When the positive electrode active material has a void in the inside thereof, the coatings may be present not only on the outer surface but also on the inner surface of the positive electrode active material. It should be noted that the fact that coatings are interspersed/present on the surface of the positive electrode active material can be confirmed according to a known method. For example, it can be confirmed by observing the coated active material using an electron microscope.

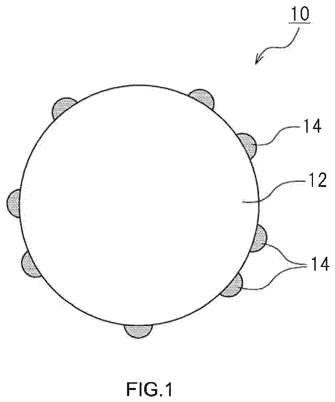

FIG. 1 shows one example of a composite active material in accordance with the present embodiment. FIG. 1 is a cross sectional view. A coated active material 10 shown in FIG. 1 includes a positive electrode active material 12 and a coating 14. The coating 14 is in a shape of a grain, and the plurality of coatings 14 are interspersed/present on the surface of the positive electrode active material 12.

In the present embodiment, the coverage by the coatings are interspersed/present on the surface of the positive electrode active material. When the coverage is too small, the reaction resistance reducing effect due to the coatings tends to decrease. Accordingly, the coverage is 0.05% or more, and desirably 0.4% or more On the other hand, when the coverage is too high, TiO₂ itself is an insulator, and hence the resistance reducing effect due to the coatings tends to decrease. Accordingly, the coverage is 5.6% or less, desirably 4.5% or less, and further desirably 2.5% or less.

It should be noted that the coverage can be determined by quantitating the ratio of the elements on the surface of the coated active material particle by the analysis with the X-ray photoelectron spectroscopy (XPS). Specifically, the element ratio of titanium (Ti) and the element ratio of metal elements (Me) other than Li of the metal elements forming the positive electrode active material, on the surface of the coated active material particle are calculated with "atomic %" as the unit. Then, the coverage can be calculated using the value of the element ratio of Ti expressed by "atomic %", and the value of the element ratio of Me expressed by "atomic %" based on the following equation. 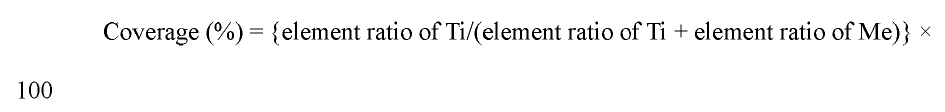 Coverage (%) = {element ratio of Ti/(element ratio of Ti + element ratio of Me)} × 100

The average particle diameter (median diameter: D50) of the coated active material has no particular restriction, and is, for example, 0.05 µm or more and 25 µm or less, desirably 1 µm or more and 20 µm or less, and more desirably 3 µm or more and 15 µm or less. It should be noted that the average particle diameter (D50) of the coated active material can be determined by, for example, the laser diffraction scattering method.

The coated active material in accordance with the present embodiment can be manufactured by, for example, the following method. A positive electrode active material and brookite type TiO₂ are fed into a known mechanochemical device, and mechanochemical processing is performed. As the processing conditions, the number of revolutions is desirably 3000 rpm or more and 6000 rpm or less, the processing time is desirably 15 minutes or more and 1 hour or less. It should be noted that by changing the mixing ratios of the positive electrode active material and the brookite type TiO₂, it is possible to control the coverage.

With the coated active material in accordance with the present embodiment, it is possible to reduce the reaction resistance. Accordingly, by using the coated active material in accordance with the present embodiment for a nonaqueous electrolyte secondary battery, it is possible to improve the output characteristic of the nonaqueous electrolyte secondary battery. The coated active material in accordance with the present embodiment is typically a coated active material for a nonaqueous electrolyte secondary battery, and is desirably a coated active material for a lithium ion secondary battery.

Under such circumstances, from another aspect, the positive electrode in accordance with the present embodiment is a positive electrode including the above-mentioned coated active material. The positive electrode has, for example, a positive electrode collector, and a positive electrode active material layer supported by the positive electrode collector, and the positive electrode active material layer includes the above-mentioned coated active material.

Further, from a still other aspect, a nonaqueous electrolyte secondary battery in accordance with the present embodiment has a positive electrode, a negative electrode, and a nonaqueous electrolyte, and the positive electrode includes the above-mentioned coated active material. The nonaqueous electrolyte secondary battery in accordance with the present embodiment typically has the above-described positive electrode.

Below, the nonaqueous electrolyte secondary battery in accordance with the present embodiment will be described in detail by taking a flat square lithium ion secondary battery having a flat-shaped wound electrode body and a flat-shaped battery case as an example. However, the nonaqueous electrolyte secondary battery in accordance with the present embodiment is not limited to the examples described below.

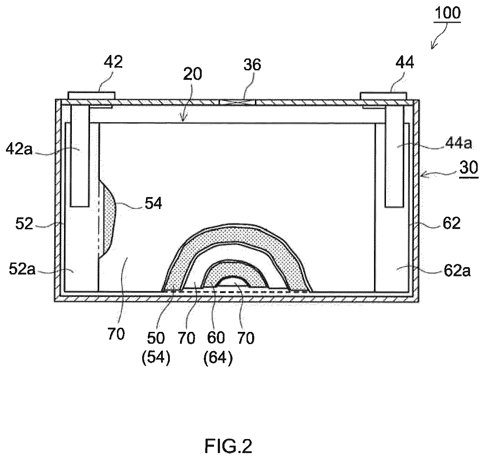

A lithium ion secondary battery 100 shown in FIG. 2 is a sealed type battery constructed by accommodating a wound electrode body 20 in a flat shape and a nonaqueous electrolyte (not shown) in a flat square battery case (i.e., an exterior container) 30. The battery case 30 is provided with a positive electrode terminal 42 and a negative electrode terminal 44 for external connection, and a thin-walled safety valve 36 set for releasing the internal pressure when the internal pressure of the battery case 30 increases to a prescribed level, or higher. The positive and negative electrode terminals 42 and 44 are electrically connected with positive and negative electrode collector plates 42a and 44a, respectively. As the material for the battery case 30, for example, a metal material which is lightweight and has good thermal conductivity such as aluminum is used.

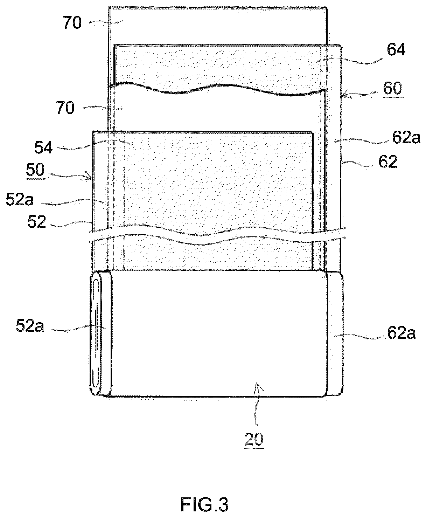

The wound electrode body 20 has a form in which a positive electrode sheet 50 and a negative electrode sheet 60 are stacked one on another with two long separator sheets 70, and are wound in the longitudinal direction as shown in FIG. 2 and FIG. 3. The positive electrode sheet 50 has a configuration in which a positive electrode active material layer 54 is formed along the longitudinal direction on one surface or both surfaces (herein, both surfaces) of the long positive electrode collector 52. The negative electrode sheet 60 has a configuration in which a negative electrode active material layer 64 is formed along the longitudinal direction on one surface or both surfaces (herein, both surfaces) of the long negative electrode collector 62. A positive electrode active material layer non-formation portion 52a (i.e. exposed portion of the positive electrode collector 52 at which the positive electrode active material layer 54 is not formed), and a negative electrode active material layer non-formation portion 62a (i.e. exposed portion of the negative electrode collector 62 at which the negative electrode active material layer 64 is not formed) are formed so as to extend off outwardly from both ends in the winding axial direction (i.e., the sheet width direction orthogonal to the longitudinal direction) of the wound electrode body 20, respectively. The positive electrode active material layer non-formation portion 52a and the negative electrode active material layer non-formation portion 62a are joined with the positive electrode collector plate 42a and the negative electrode collector plate 44a, respectively.

As the positive electrode collector 52, a known positive electrode collector for use in a lithium ion secondary battery may be used. Examples thereof may include a sheet or foil made of a metal with good electric conductivity (e.g., aluminum, nickel, titanium, or stainless steel). The positive electrode collector 52 is desirably aluminum foil.

The dimensions of the positive electrode collector 52 has no particular restriction, and may be appropriately determined according to the battery design. When aluminum foil is used as the positive electrode collector 52, the thickness thereof has no particular restriction, and is, for example, 5 µm or more and 35 µm or less, and desirably 7 µm or more and 20 µm or less.

The positive electrode active material layer 54 includes a positive electrode active material. For the positive electrode active material, the foregoing coated active material is used.

The positive electrode active material layer 54 may include other components than the positive electrode active material, for example, trilithium phosphate, a conductive material, a binder, and the like. As the conductive material, for example, carbon black such as acetylene black (AB), or other carbon materials (e.g., graphite) can be desirably used. As the binder, for example, polyvinylidene fluoride (PVDF) can be used.

The content of the positive electrode active material in the positive electrode active material layer 54 (i.e., the content of the positive electrode active material based on the total mass of the positive electrode active material layer 54) has no particular restriction, and is desirably 70 mass% or more, more desirably 80 mass% or more and 97 mass% or less, and further desirably 85 mass% or more and 96 mass% or less. The content of the trilithium phosphate in the positive electrode active material layer 54 has no particular restriction, and is desirably 1 mass% or more and 15 mass% or less, and more desirably 2 mass% or more and 12 mass% or less. The content of the conductive material in the positive electrode active material layer 54 has no particular restriction, and is desirably 1 mass% or more and 15 mass% or less, and more desirably 3 mass% or more and 13 mass% or less. The content of the binder in the positive electrode active material layer 54 has no particular restriction, and is desirably 1 mass% or more and 15 mass% or less, and more desirably 1.5 mass% or more and 10 mass% or less.

The thickness of the positive electrode active material layer 54 has no particular restriction, and is, for example, 10 µm or more and 300 µm or less, and desirably 20 µm or more and 200 µm or less.

As the negative electrode collector 62, a known negative electrode collector for use in a lithium ion secondary battery may be used. Examples thereof may include a sheet or foil made of a metal with good electric conductivity (e.g., copper, nickel, titanium, or stainless steel). The negative electrode collector 52 is desirably copper foil.

The dimensions of the negative electrode collector 62 have no particular restriction, and may be appropriately determined according to the battery design. When as the negative electrode collector 62, copper foil is used, the thickness thereof has no particular restriction, and is, for example, 5 µm or more and 35 µm or less, and desirably 7 µm or more and 20 µm or less.

The negative electrode active material layer 64 includes a negative electrode active material. As the negative electrode active material, for example, a carbon material such as graphite, hard carbon, or soft carbon can be used. Graphite may be natural graphite or artificial graphite, and may be amorphous carbon coated graphite in a form in which graphite is coated with an amorphous carbon material.

The average particle diameter (median diameter: D50) of the negative electrode active material has no particular restriction, and is, for example, 0.1 µm or more and 50 µm or less, desirably 1 µm or more and 25 µm or less, and more desirably 5 µm or more and 20 µm or less. It should be noted that the average particle diameter (D50) of the negative electrode active material can be determined by, for example, the laser diffraction scattering method.

The negative electrode active material layer 64 can include other components than the active material, for example, a binder and a thickener. As the binder, for example, styrene butadiene rubber (SBR), or polyvinylidene fluoride (PVDF) can be used. As the thickener, for example, carboxymethyl cellulose (CMC) can be used.

The content of the negative electrode active material in the negative electrode active material layer is desirably 90 mass% or more, and more desirably 95 mass% or more and 99 mass% or less. The content of the binder in the negative electrode active material layer is desirably 0.1 mass% or more and 8 mass% or less, and is more desirably 0.5 mass% or more and 3 mass% or less. The content of the thickener in the negative electrode active material layer is desirably 0.3 mass% or more and 3 mass% or less, and more desirably 0.5 mass% or more and 2 mass% or less.

The thickness of the negative electrode active material layer 64 has no particular restriction, and is, for example, 10 µm or more and 300 µm or less, and desirably 20 µm or more and 200 µm or less.

Examples of the separator 70 may include a porous sheet (film) including a resin such as polyethylene (PE), polypropylene (PP), polyester, cellulose, or polyamide. Such a porous sheet may be of a monolayer structure, or a lamination structure of two or more layers (e.g., a three-layered structure in which PP layers are stacked on both surfaces of a PE layer). A heat resistant layer (HRL) may be provided on the surface of the separator 70.

The nonaqueous electrolyte typically includes a nonaqueous solvent and a support salt (electrolyte salt). As the nonaqueous solvents, organic solvents such as various carbonates, ethers, esters, nitriles, sulfones, and lactones for use in an electrolyte of a general lithium ion secondary battery can be used without particular restriction. Specific examples thereof may include ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), and trifluoro dimethyl carbonate (TFDMC). Such nonaqueous solvents can be used singly alone, or in combination of two or more thereof.

As the support salt, for example, a lithium salt (desirably LiPF₆) such as LiPF₆, LiBF₄, or lithium bis(fluorosulfonyl)imide (LiFSI) can be desirably used. The concentration of the support salt is desirably 0.7 mol/L or more and 1.3 mol/L or less.

It should be noted that the nonaqueous electrolyte may include other components than the foregoing components, for example, various additives including a film forming agent such as oxalato complex; a gas generator such as biphenyl (BP) or cyclohexyl benzene (CHB); a thickener; and the like unless the effects of the present invention are remarkably impaired.

The lithium ion secondary battery 100 can be manufactured in the same manner as with a known method, except for using the foregoing coated active material as the positive electrode active material.

The lithium ion secondary battery 100 configured as described up to this point is excellent in output characteristic. The lithium ion secondary battery 100 is usable for various uses. As specific uses, mention may be made of a portable power supply for a personal computer, a portable electronic device, a portable terminal, or the like; a power supply for driving vehicles such as a battery electric vehicle (BEV), a hybrid electric vehicle (HEV), or a plug-in hybrid electric vehicle (PHEV); a storage battery for a compact electric power storage device, and the like. Out of these, the vehicle driving power supply is desirable. The lithium ion secondary battery 100 can also be used in the form of a battery pack typically including therein a plurality of batteries connected in series and/or in parallel to one another.

It should be noted that the square lithium ion secondary battery 100 including the flat-shaped wound electrode body 20 has been described. However, the nonaqueous electrolyte secondary battery herein disclosed can also be configured as a lithium ion secondary battery including a stacked-type electrode body (i.e., an electrode body including a plurality of positive electrodes and a plurality of negative electrodes stacked alternately). Alternatively, the nonaqueous electrolyte secondary battery herein disclosed can also be configured as a coin type lithium ion secondary battery, a button type lithium ion secondary battery, a cylindrical lithium ion secondary battery, or a laminate-cased lithium ion secondary battery. Still alternatively, the nonaqueous electrolyte secondary battery herein disclosed can also be configured as a nonaqueous electrolyte secondary battery other than a lithium ion secondary battery according to a known method.

Below, examples regarding the present invention will be described. However, it is not intended that the present invention is limited to such examples.

### Manufacturing of Positive Electrode Active Material

An aqueous solution obtained by dissolving a sulfuric acid salt(s) of a metal(s) other than Li was prepared. For example, when a LiNi_{1/3}Co_{1/3}Mn_{1/3}O₂ particle having a layered structure was manufactured as the positive electrode active material particle, an aqueous solution including nickel sulfate, cobalt sulfate, and manganese sulfate so that the molar ratios of Ni, Co, and Mn became 1 : 1 : 1 was prepared. Thereto, were added NaOH and aqueous ammonia for neutralization, thereby precipitating composite hydroxide including other the metal(s) than Li, which is a precursor of the positive electrode active material. The resulting composite hydroxide and lithium carbonate were mixed at prescribed ratios. For example, when a LiNi_{1/3}Co_{1/3}Mn_{1/3}O₂ particle having a layered structure was manufactured as the positive electrode active material particle, composite hydroxide and lithium carbonate were mixed so that the molar ratios of the sum of Ni, Co, and Mn, and Li became 1 : 1. The mixture was fired in an electric furnace at 870°C for 15 hours. The fired product was subjected to a disaggregation treatment after being cooled to room temperature in an electric furnace, resulting in a spheroidal positive electrode active material particle including primary particles aggregated therein.

In this manner, as the positive electrode active material, LiNi_{1/3}Co_{1/3}Mn_{1/3}O₂, LiCoO₂, LiMn₂O₄, LiNiO₂, LiNi_{0.5}Mn_{1.5}O₄, and LiNi_{0.8}Co_{0.15}Al_{0.05}O₂ were manufactured.

### 1. Study of Crystal Structure of Coating TiO₂

### Examples 1 to 6

LiNi_{1/3}Co_{1/3}Mn_{1/3}O₂ and brookite type TiO₂ ("TIO19PB" manufactured by Kojundo Chemical Lab. Co., Ltd.: purity 4 N) were charged into a mechanochemical device, and were subjected to a mechanochemical processing at a number of revolutions of 6000 rpm for 30 minutes. At this step, by changing the amount of TiO₂ with respect to the amount of the positive electrode active material, the coverage was changed. This resulted in coated active materials having coatings of brookite type TiO₂ of Examples 1 to 6 having different coverages.

### Comparative Example 1

LiNi_{1/3}Co_{1/3}Mn_{1/3}O₂ was used as an active material of Comparative Example 1 as it was (i.e., without performing mechanochemical processing using TiO₂).

### Comparative Examples 2 to 4

LiNi_{1/3}Co_{1/3}Mn_{1/3}O₂ and anatase type TiO₂ were charged into a mechanochemical device, and were subjected to mechanochemical processing at a number of revolutions of 6000 rpm for 30 minutes. At this step, by changing the amount of TiO₂ with respect to the amount of the positive electrode active material, the coverage was changed. This resulted in coated active materials having coatings of anatase type TiO₂ of Comparative Examples 2 to 4 having different coverages.

### Comparative Examples 5 to 7

LiNi_{1/3}Co_{1/3}Mn_{1/3}O₂ and rutile type TiO₂ were charged into a mechanochemical device, and were subjected to mechanochemical processing at a number of revolutions of 6000 rpm for 30 minutes. At this step, by changing the amount of TiO₂ with respect to the amount of the positive electrode active material, the coverage was changed. This resulted in coated active materials having coatings of rutile type TiO₂ of Comparative Examples 5 to 7 having different coverages.

### Measurement of Coverage of Coated Active Material

In a glove box, the manufactured coated active material was placed in a sample pan made of aluminum, and was pressed by a tablet forming machine, thereby manufacturing a test specimen. This was bonded to a XPS analysis holder. Using a XPS analyzer "PHI 5000 VersaProbe II" (manufactured by ULVAC-PHI Co.), the XPS measurement was performed under the conditions shown below. The composition analysis of the measurement element was performed, and the ratio of each element was calculated in terms of "Atomic%". Using this value, the coverage (%) was calculated by the formula: {element ratio of Ti/(element ratio of Ti + element ratio of Me)} × 100. It should be noted that in the formula, Me is a metal element other than Li of the positive electrode active material (e.g., in the case of LiNi_{1/3}Co_{1/3}Mn_{1/3}O₂, Me is Ni, Co, and Mn).
X-ray source: AlKα monochromatic light
Irradiation range φ 100 µm HP (1400 × 200)
Current Voltage: 100 W, 20 kV
Neutralizer: ON
Path energy: 187.85 eV (wide), 46.95 - 117.40 eV (narrow)
Step: 0.4 eV (wide), 0.1 eV (narrow)
Shift correction: C-C, C-H (C1s, 284.8 eV)
Peak information: Handbook of XPS (ULVAC-PHI)

### Manufacturing of Evaluating Lithium Ion Secondary Battery

Each of the active materials of respective Examples and respective Comparative Examples manufactured, acetylene black (AB) as a conductive material, polyvinylidene fluoride (PVDF) as a binder, and N-methyl pyrrolidone (NMP) as a disperse medium were mixed using a planetary mixer, thereby preparing a positive electrode active material layer forming paste. Here, the mass ratios of the active material, AB, and PVDF were set at 90 : 8 : 2, and the solid content concentration was set at 56 mass%. The paste was coated on both surfaces of aluminum foil using a die coater, and was dried, followed by pressing, thereby manufacturing a positive electrode sheet.

Further, natural graphite (C) as a negative electrode active material, styrene butadiene rubber (SBR) as a binder, and carboxymethyl cellulose (CMC) as a thickener were mixed at mass ratios of C : SBR : CMC = 98 : 1 : 1 in ion exchanged water, thereby preparing a negative electrode active material layer forming paste. The paste was coated on both surfaces of copper foil using a die coater, and was dried, followed by pressing, thereby manufacturing a negative electrode sheet.

Further, as the separator sheets, two porous polyolefine sheets each having a three-layered structure of PP/PE/PP and with a thickness of 24 µm were prepared.

The manufactured positive electrode sheet and negative electrode sheet and the two prepared separator sheets were stacked one on another, and were wound, thereby manufacturing a wound electrode body. Electrode terminals were attached to the positive electrode sheet and the negative electrode sheet of the manufactured wound electrode body, respectively by welding, which was accommodated in a battery case having a liquid injection port.

Subsequently, a nonaqueous electrolyte was injected from the liquid injection port of the battery case, and the liquid injection port was hermetically sealed by a sealing lid. It should be noted that for the nonaqueous electrolyte, the one obtained by dissolving LiPF₆ as a support salt in a mixed solvent including ethylene carbonate (EC), dimethyl carbonate (DMC), and ethyl methyl carbonate (EMC) at volume ratios of 1 : 1 : 1 at a concentration of 1.0 mol/L was used. In the manner described up to this point, an evaluating lithium ion secondary battery was obtained.

### Reaction Resistance Measurement

After activating each evaluating lithium ion secondary battery, the voltage was adjusted to 3.7 V. The each evaluating lithium ion secondary battery was placed under environment of a temperature of -10°C, and was subjected to impedance measurement with an alternating voltage having a voltage amplitude of 5 mV applied within the frequency range of 0.01 Hz to 100,000 Hz. Then, the diameter R of the resulting circular arc of Cole-Cole plot was determined as the reaction resistance (Rct). The ratios of the Rct's of respective Examples and other respective Comparative Examples when the Rct of Comparative Example 1 was taken as 1 were determined. The results are shown in Table 1.

### [Table 1]

**Table 1**

| | Coating | Coverage (%) | Reaction resistance ratio |
|---|---|---|---|
| Comparative Example 1 | None | 0 | 1 |
| Comparative Example 2 | Anatase type TiO₂ | 0.06 | 0.93 |
| Comparative Example 3 | Anatase type TiO₂ | 2.9 | 0.78 |
| Comparative Example 4 | Anatase type TiO₂ | 5.5 | 0.8 |
| Comparative Example 5 | Rutile type TiO₂ | 0.04 | 0.93 |
| Comparative Example 6 | Rutile type TiO₂ | 2 | 0.75 |
| Comparative Example 7 | Rutile type TiO₂ | 5.9 | 0.78 |
| Example 1 | Brookite type TiO₂ | 0.01 | 0.72 |
| Example 2 | Brookite type TiO₂ | 0.05 | 0.66 |
| Example 3 | Brookite type TiO₂ | 0.4 | 0.63 |
| Example 4 | Brookite type TiO₂ | 2.5 | 0.64 |
| Example 5 | Brookite type TiO₂ | 4.5 | 0.66 |
| Example 6 | Brookite type TiO₂ | 5.6 | 0.74 |

Comparison between Comparative Example 1, and Examples and other Comparative Examples indicates that coating of the layered structured nickel cobalt manganese composite oxide with TiO₂ can reduce the reaction resistance of the battery. Further, according to the results of Table 1, when the layered structured nickel cobalt manganese composite oxide was coated with TiO₂, the reaction resistance in the lithium ion secondary battery using each coated active material of Examples 1 to 6 coated with the brookite type TiO₂ was smaller than the reaction resistance in the lithium ion secondary battery using each coated active material of Comparative Examples 2 to 4 coated with the anatase type TiO₂, and the reaction resistance in the lithium ion secondary battery using each coated active material of Comparative Examples 5 to 7 coated with the rutile type TiO₂. Accordingly, it is indicated that the coated active material coated with the brookite type TiO₂ can remarkably reduce the reaction resistance.

Further, regarding the coverage, from the comparison among Examples 1 to 6, when the coverage falls within the range of 0.05% to 4.5%, the reaction resistance is very small, and when the coverage falls within the range of 0.4% to 2.5%, the reaction resistance is particularly small.

### 2. Study of Kind of Positive Electrode Active Material

### Example 7 and Comparative Example 8

As the positive electrode active material, LiCoO₂ was prepared. In Example 7, LiCoO₂ and the brookite type TiO₂ were charged into a mechanochemical device, and were subjected to mechanochemical processing with a number of revolutions of 6000 rpm for 30 minutes, resulting in a coated active material of Example 7. On the other hand, LiCoO₂ was used as an active material of Comparative Example 8 as it was (i.e., without performing mechanochemical processing using TiO₂).

Using the active materials, in the same manner as described above, an evaluating lithium ion secondary battery was manufactured, and in the same manner as described above, the reaction resistance (Rct) was evaluated. The ratio of the Rct of Example 7 when the Rct of Comparative Example 8 was taken as 1 was determined. The result is shown in Table 2.

### Example 8 and Comparative Example 9

As the positive electrode active material, LiMn₂O₄ was prepared. In Example 8, LiMn₂O₄ and the brookite type TiO₂ were charged into a mechanochemical device, and were subjected to mechanochemical processing with a number of revolutions of 6000 rpm for 30 minutes, resulting in a coated active material of Example 8. On the other hand, LiMn₂O₄ was used as an active material of Comparative Example 9 as it was (i.e., without performing mechanochemical processing using TiO₂).

Using the active materials, in the same manner as described above, an evaluating lithium ion secondary battery was manufactured, and in the same manner as described above, the reaction resistance (Rct) was evaluated. The ratio of the Rct of Example 8 when the Rct of Comparative Example 9 was taken as 1 was determined. The result is shown in Table 2.

### Example 9 and Comparative Example 10

As the positive electrode active material, LiNiO₂ was prepared. In Example 9, LiNiO₂ and the brookite type TiO₂ were charged into a mechanochemical device, and were subjected to mechanochemical processing with a number of revolutions of 6000 rpm for 30 minutes, resulting in a coated active material of Example 9. On the other hand, LiNiO₂ was used as an active material of Comparative Example 10 as it was (i.e., without performing mechanochemical processing using TiO₂).

Using the active materials, in the same manner as described above, an evaluating lithium ion secondary battery was manufactured, and in the same manner as described above, the reaction resistance (Rct) was evaluated. The ratio of the Rct of Example 9 when the Rct of Comparative Example 10 was taken as 1 was determined. The result is shown in Table 2.

### Example 10 and Comparative Example 11

As the positive electrode active material, LiNi_{0.5}Mn_{1.5}O₄ was prepared. In Example 10, LiNi_{0.5}Mn_{1.5}O₄ and the brookite type TiO₂ were charged into a mechanochemical device, and were subjected to mechanochemical processing with a number of revolutions of 6000 rpm for 30 minutes, resulting in a coated active material of Example 10. On the other hand, LiNi_{0.5}Mn_{1.5}O₄ was used as an active material of Comparative Example 11 as it was (i.e., without performing mechanochemical processing using TiO₂).

Using the active materials, in the same manner as described above, an evaluating lithium ion secondary battery was manufactured, and in the same manner as described above, the reaction resistance (Rct) was evaluated. The ratio of the Rct of Example 10 when the Rct of Comparative Example 11 was taken as 1 was determined. The result is shown in Table 2.

### Example 11 and Comparative Example 12

As the positive electrode active material, LiNi_{0.8}Co_{0.15}Al_{0.05}O₂ was prepared. In Example 11, LiNi_{0.8}Co_{0.15}Al_{0.05}O₂ and the brookite type TiO₂ were charged into a mechanochemical device, and were subjected to mechanochemical processing with a number of revolutions of 6000 rpm for 30 minutes, resulting in a coated active material of Example 11. On the other hand, LiNi_{0.8}Co_{0.15}Al_{0.05}O₂ was used as an active material of Comparative Example 12 as it was (i.e., without performing mechanochemical processing using TiO₂).

Using the active materials, in the same manner as described above, an evaluating lithium ion secondary battery was manufactured, and in the same manner as described above, the reaction resistance (Rct) was evaluated. The ratio of the Rct of Example 11 when the Rct of Comparative Example 12 was taken as 1 was determined. The result is shown in Table 2.

### [Table 2]

**Table 2**

| | Positive electrode active material | Coating | Coverage (%) | Reaction resistance ratio |
|---|---|---|---|---|
| Comparative Example 1 | LiNi_{1/3}Co_{1/3}Mn_{1/3}O₂ | None | 0 | 1 |
| Example 3 | LiNi_{1/3}Co_{1/3}Mn_{1/3}O₂ | Brookite type TiO₂ | 0.4 | 0.63 |
| Comparative Example 8 | LiCoO₂ | None | 0 | 1 |
| Example 7 | LiCoO₂ | Brookite type TiO₂ | 0.5 | 0.66 |
| Comparative Example 9 | LiMn₂O₄ | None | 0 | 1 |
| Example 8 | LiMn₂O₄ | Brookite type TiO₂ | 0.5 | 0.71 |
| Comparative Example 10 | LiNiO₂ | None | 0 | 1 |
| Example 9 | LiNiO₂ | Brookite type TiO₂ | 0.4 | 0.65 |
| Comparative Example 11 | LiNi_{0.5}Mn_{1.5}O₄ | None | 0 | 1 |
| Example 10 | LiNi_{0.5}Mn_{1.5}O₄ | Brookite type TiO₂ | 0.4 | 0.69 |
| Comparative Example 12 | LiNi_{0.8}Co_{0.15}Al_{0.05}O₂ | None | 0 | 1 |
| Example 11 | LiNi_{0.8}Co_{0.15}Al_{0.05}O₂ | Brookite type TiO₂ | 0.5 | 0.7 |

Table 2 also shows the results of Comparative Example 3 and Example 1 together. As shown in the results of Table 2, in any Example, as compared with Comparative Example, the reaction resistance of the lithium ion secondary battery was remarkably smaller. This indicates as follows: irrespective of the composition and the crystal structure of the positive electrode active material, coating of the positive electrode active material with the brookite type TiO₂ can provide a remarkable reaction resistance reducing effect. Further, it is indicated that when the positive electrode active material is a lithium nickel cobalt manganese type composite oxide, the reaction resistance reducing effect becomes particularly high.

The results described up to this point indicate as follows: the coated active material herein disclosed can reduce the reaction resistance, and can improve the output characteristic of a nonaqueous electrolyte secondary battery using the same.

## Claims

1. A coated active material (10), comprising:
a positive electrode active material (12); and
a coating (14) present on a surface of the positive electrode active material (12),
wherein
the coating (14) includes brookite type TiO₂ in an amount of 75 mol% or more,
a coverage of the coating (14) determined by quantitating the ratio of the elements on the surface of the coated active material particle by the analysis with the X-ray photoelectron spectroscopy is 0.05% or more and 5.6% or less, and
the positive electrode active material is a lithium nickel cobalt manganese type composite oxide, wherein the coverage is calculated based on the following equation:
Coverage (%) = {element ratio of Ti/(element ratio of Ti + element ratio of Me)} × 100, wherein Me is a metal element other than Li of the positive electrode active material.

2. The coated active material (10) according to claim 1, wherein a coverage of the coating (14) is 0.05% or more and 4.5% or less.

3. A nonaqueous electrolyte secondary battery (100), comprising:
a positive electrode (50);
a negative electrode (60); and
a nonaqueous electrolyte,
wherein the positive electrode (50) includes the coated active material (10) according to claim 1 or 2.

4. The nonaqueous electrolyte secondary battery (100) according to claim 3, which is a lithium ion secondary battery.

## Patentansprüche

1. Beschichtetes aktives Material (10), umfassend:
ein aktives Material (12) der positiven Elektrode; und
eine Beschichtung (14), die auf einer Oberfläche des aktiven Materials (12) der positiven Elektrode vorhanden ist,
wobei
die Beschichtung (14) TiO₂ vom Brookit-Typ in einer Menge von 75 Mol-% oder mehr umfasst,
ein Bedeckungsgrad der Beschichtung (14), bestimmt durch Quantifizierung des Elementverhältnisses auf der Oberfläche des beschichteten Partikels des aktiven Materials mittels Röntgen-Photoelektronenspektroskopie, 0,05 % oder mehr und 5,6 % oder weniger beträgt, und
das aktive Material der positiven Elektrode ein Verbundoxid vom Lithium-Nickel-Kobalt-Mangan-Typ ist, wobei der Bedeckungsgrad anhand der folgenden Gleichung berechnet wird:
Bedeckungsgrad (%) = {Elementverhältnis von Ti / (Elementverhältnis von Ti + Elementverhältnis von Me)} × 100, wobei Me ein anderes Metallelement als Li des aktiven Materials der positiven Elektrode ist.

2. Beschichtetes aktives Material (10) nach Anspruch 1, wobei der Bedeckungsgrad der Beschichtung (14) 0,05 % oder mehr und 4,5 % oder weniger beträgt.

3. Eine Sekundärbatterie (100) mit nichtwässrigem Elektrolyten, umfassend:
eine positive Elektrode (50);
eine negative Elektrode (60); und
einen nichtwässrigen Elektrolyten,
wobei die positive Elektrode (50) das beschichtete aktive Material (10) nach Anspruch 1 oder 2 umfasst.

4. Sekundärbatterie (100) mit nichtwässrigem Elektrolyten nach Anspruch 3, die eine Lithium-Ionen-Sekundärbatterie ist.

## Revendications

1. Un matériau actif recouvert (10), comprenant :
un matériau actif d'électrode positive (12) ; et
un revêtement (14) présent sur une surface du matériau actif d'électrode positive (12),
dans lequel
le revêtement (14) comprend du TiO₂ de type brookite en une quantité égale ou supérieure à 75 % en moles,
le taux de couverture du revêtement (14), déterminé en quantifiant le rapport des éléments à la surface de la particule de matériau actif recouvert par analyse par spectroscopie photoélectronique à rayons X, est de 0,05 % à 5,6 %, et
le matériau actif de l'électrode positive est un oxyde composite de type lithium-nickel-cobalt-manganèse, le taux de couverture étant calculé selon l'équation suivante :
Couverture (%) = {rapport élémentaire du Ti / (rapport élémentaire du Ti + rapport élémentaire du Me)} × 100, où Me est un élément métallique autre que le Li du matériau actif de l'électrode positive.

2. Le matériau actif recouvert (10) selon la revendication 1, dans lequel le taux de couverture du revêtement (14) est de 0,05 % à 4,5 %.

3. Une batterie secondaire à électrolyte non aqueux (100), comprenant :
une électrode positive (50) ;
une électrode négative (60) ; et
un électrolyte non aqueux,
dans laquelle l'électrode positive (50) comprend le matériau actif recouvert (10) selon la revendication 1 ou 2.

4. La batterie secondaire à électrolyte non aqueux (100) selon la revendication 3, qui est une batterie secondaire au lithium-ion.
